# FASCICULE DE BREVET EUROPEEN

(11) **EP 2 113 457 B1**
(45) Date de publication et mention de la délivrance du brevet: **04.06.2014**
(21) Numéro de dépôt: 09005347.1
(22) Date de dépôt: 15.04.2009
(51) Int. Cl.: B64D 11/06, B64D 25/04, F16F 7/12

(54) **Siège anti-écrasement d'un véhicule**
Fahrzeug Unfallsitz
Vehicle crashworthy seat

(30) Priorité: 28.04.2008 FR 0802359
(43) Date de publication de la demande: 04.11.2009
(73) Titulaire: Airbus Helicopters, 13725 Marignane Cedex (FR)
(72) Inventeur: Honnorat, Olivier, 13090 Aix-en-Provence (FR); Manfredotti, Thomas, 06480 La Colle sur Loup (FR); Feuillarade, Olivier, 13009 Marseille (FR)
(74) Mandataire: GPI & Associés

(56) Documents cités:
- BE-A- 646 747
- GB-A- 1 077 322
- US-A- 3 482 872
- US-A- 3 985 388
- US-A- 5 125 598

## Description

La présente invention concerne un siège anti-écrasement d'un véhicule, un siège de giravion plus particulièrement.

En effet, en cas de crash du véhicule, il convient de protéger l'intégrité physique des passagers de ce véhicule et d'éviter notamment un phénomène d'écrasement.

Pour dissiper l'énergie due au crash du véhicule, les fabricants de siège ont opté pour des dispositifs dissipant l'énergie cinétique du siège par écrasement d'un élément.

On connaît par le document EP0814020, un premier siège de ce type.

Selon ce document EP0814020, un siège anti-écrasement d'un véhicule comprend un baquet et un piètement pour lier le baquet au plancher du véhicule, le baquet étant pourvu d'une assise et d'un dossier pour accueillir un individu.

Le piètement est muni d'un premier et d'un deuxième pieds prolongés chacun par un élément vertical de soutien muni d'une nervure.

De plus, le siège est pourvu d'un élément de fixation, par élément vertical de soutien, supporté par le dossier du baquet. Par suite, chaque nervure est engagée dans un canal de l'élément de fixation associé, la portion de la nervure située au dessus de l'élément de fixation ayant une section transversale plus petite que la portion de la nervure située au-dessous de cet élément de fixation.

Lors d'un crash du véhicule, un hélicoptère par exemple, la descente de ce véhicule est violemment et brusquement stoppée lors du contact du véhicule avec le sol.

Du fait de son inertie l'ensemble baquet/ individu tend à continuer sa descente et les éléments de fixation glissent le long des nervures qui remplissent alors le rôle de moyen de guidage.

De plus, ces éléments de fixation rabotent la nervure lors de leur mouvement descendant ce qui permet à ladite nervure de remplir le rôle d'absorbeur d'énergie, en l'occurrence l'énergie provenant de l'énergie cinétique du baquet et de l'individu qui l'occupe.

Par conséquent, la décélération subie par le baquet et ledit individu est réduite de manière conséquente par l'intermédiaire des nervures des éléments verticaux de soutien.

Ce premier siège prévoit donc un moyen remplissant à la fois le rôle de moyen de guidage et de moyen d'absorption, l'arrachement de matière de ce moyen d'absorption s'avérant très efficace.

Néanmoins, suite au crash, il convient de remplacer les éléments verticaux de soutien et les éléments de fixation ce qui induit un coût non négligeable.

On connaît par le document EP0078479 un deuxième siège anti-écrasement muni d'une première structure comportant un baquet et un châssis fixé au baquet.

De plus, le deuxième siège est pourvu de deux colonnes aptes à être fixées à une ossature d'un véhicule.

Le châssis possède deux manchons, chaque manchon étant apte à coulisser sur chaque colonne lesquelles remplissent alors le rôle de moyen de guidage.

Afin d'empêcher le coulissement des manchons en condition normale, le siège comporte une pluralité de barres fixées par leur extrémité supérieure à des chapiteaux agencés aux extrémités supérieures des colonnes. Plus précisément, le siège comprend un chapiteau par colonne, chaque chapiteau étant équipé de quatre barres.

De plus, chaque colonne est entourée par une matrice d'étirage, elle-même entourée par un collier. Les barres d'une colonne traversent un passage d'étirage ménagé dans la matrice d'étirage de la colonne.

On note que le diamètre de chaque barre en dessous de la matrice d'étirage est plus important que le diamètre du passage d'étirage.

Par suite, comme pour le premier siège, lors de la descente rapide du baquet provoquée par un crash, les barres sont déformées par la matrice d'étirage ce qui permet d'absorber une quantité d'énergie importante.

A contrario, le moyen de guidage, à savoir les colonnes, est désormais dissocié du moyen d'absorption, à savoir les barres. A l'issue du crash, il convient juste de changer les barres et la matrice d'étirage ce qui permet de limiter les coûts.

Toutefois, ce remplacement implique pratiquement un démontage complet du siège. De plus, les coûts de fabrication du siège demeurent relativement importants du fait de tolérances de fabrication serrée.

Le document GB 1,077,322 A montre un autre siège anti-écrasement comprenant les caractéristiques du préambule de la revendication 1.

La présente invention a alors pour objet de proposer un siège de véhicule à bas coût et nécessitant des actions de maintenance limitées suite à un crash.

Selon l'invention, un siège anti-écrasement d'un véhicule comprend les caractéristiques présentes dans les revendications.

Ce siège anti-écrasement comprend un baquet et un piètement pour lier le baquet au plancher du véhicule, le baquet étant pourvu d'une assise et d'un dossier pour accueillir un individu, le piètement étant muni d'un premier et d'un deuxième pieds aptes à être fixés au plancher de part et d'autre du baquet, ces premier et deuxième pieds étant liés mécaniquement à un premier et deuxième montants de soutien verticaux du dossier.

Ce siège est remarquable en ce qu'il comporte un moyen de soutien solidarisé aux premier et deuxième montants de soutien verticaux ainsi qu'un moyen de guidage en translation du baquet et un moyen d'absorption d'énergie distincts, les moyens de guidage et d'absorption coopérant chacun avec un moyen de commande solidaire du dossier du baquet du siège, le moyen de guidage coopérant avec le moyen de commande pour guider en translation le déplacement du baquet dans une direction prédéterminée lors d'un crash, le moyen d'absorption coopérant avec le moyen de commande et le moyen de soutien pour absorber l'énergie cinétique du siège afin de contrôler la décélération à laquelle est soumis l'individu assis sur le siège.

Par conséquent, durant un crash, le moyen d'absorption est déformé, une partie de ce moyen d'absorption étant maintenue fixement par le moyen de soutien alors que le moyen de commande tire sur une autre portion du moyen d'absorption. La déformation élastique ou plastique du moyen d'absorption lui confère alors un pouvoir d'absorption d'énergie.

A l'issue du crash, ou de l'atterrissage dur de l'hélicoptère, si le moyen d'absorption a été déformé plastiquement, il suffit juste de changer ce moyen d'absorption pour réutiliser le siège.

Le moyen d'absorption est muni d'au moins un élément absorbant à déformation plastique lors d'une traction pure, tel qu'un élément d'absorption selon l'invention. On verra par la suite qu'il est possible d'utiliser une pluralité d'éléments absorbants pour obtenir les caractéristiques souhaitées en fonction notamment du poids du baquet et de celui du passager supporté.

Les sièges de l'art antérieur fonctionnent par arrachement de matière ce qui implique des tolérances de fabrication très serrées et donc des coûts de fabrication importants. L'utilisation d'éléments absorbants peut au contraire être facilement implémentée ce qui réduit considérablement le coût du siège.

Un élément absorbant d'énergie est muni d'une portion absorbante, d'un premier point d'ancrage et d'un deuxième point d'ancrage, une première et une deuxième extrémités distales de la partie absorbante étant respectivement solidarisées aux premier et deuxième points d'ancrage. De plus, la portion absorbante comporte au moins un élément filiforme solide, éventuellement d'épaisseur constante, se déformant élastiquement lors d'une sollicitation en traction inférieure à un seuil prédéterminé et plastiquement lors d'une sollicitation en traction supérieure à ce seuil prédéterminé, cet au moins un élément filiforme étant muni d'une succession de segments droits sensiblement parallèles entre eux et de segments en arc de cercle de manière à avoir au moins deux segments droits successifs reliés par un segment en arc de cercle.

Lorsque l'on tire sur le deuxième point d'ancrage, chaque segment en arc de cercle tend à se déplier en étant déformé élastiquement ou plastiquement, cette déformation élastique ou plastique lui conférant un pouvoir d'absorption d'énergie.

Par définition, l'élément filiforme de la portion absorbante de l'élément absorbant a une forme très allongée par rapport à sa dimension transverse, la longueur développée de chaque élément filiforme étant très supérieure à son épaisseur. Ainsi, l'élément filiforme peut être un fil, ayant une section de forme diverse et non pas nécessairement circulaire. De plus, l'élément filiforme comporte avantageusement un matériau métallique de manière à présenter des caractéristiques optimales en termes de déformations élastique et plastique.

En outre, de manière surprenante et malgré son faible coût, cet élément absorbant est particulièrement résistant ce qui autorise son implémentation dans un siège anti-crash.

Par ailleurs, les première et deuxième extrémités distales comprennent avantageusement chacune un segment droit ce qui facilite leur solidarisation aux premier et deuxième points d'ancrage.

En outre, l'élément absorbant ayant une pluralité de segments en arc de cercle présentant chacun une concavité, un premier segment en arc de cercle étant relié à un deuxième segment en arc de cercle lui succédant par un segment droit, la première concavité dudit premier segment en arc de cercle est éventuellement dirigée selon une première direction opposée à une deuxième direction selon laquelle est dirigée la deuxième concavité dudit deuxième segment en arc de cercle.

Ainsi, l'élément filiforme a une forme onduleuse, sinueuse de manière à former un serpentin. Cette caractéristique favorise l'allongement de l'élément absorbant ce qui maximise son pouvoir absorbant.

Par ailleurs, chaque segment en arc de cercle a éventuellement une forme de demi-cercle régulier et/ou un rayon supérieur ou égal à deux millimètres. Pour l'homme du métier, cela revient à dire que chaque segment en arc de cercle représente une partie de la périphérie d'un cercle fictif d'un rayon supérieur ou égal à deux millimètres.

Ainsi, l'élément filiforme ne présentera pas de concentrations importantes de contraintes et ne risquera donc pas de casser indûment.

Pour optimiser l'efficacité de l'élément absorbant revendiqué, cet élément absorbant comporte non pas un mais deux éléments filiformes en vis-à-vis reliés uniquement via leurs segments droits de leurs zones extrémales.

Chaque élément filiforme ayant un segment droit primaire à sa première zone extrémale ainsi qu'un segment droit secondaire à sa deuxième zone extrémale, les premier et deuxième éléments filiformes sont reliés uniquement via leurs zones extrémales de manière à former les première et deuxième extrémités distales de la portion absorbante. Ledit deuxième élément filiforme est symétriquement solidarisé au premier élément filiforme par rapport à un axe de symétrie de l'élément absorbant

Ainsi, le segment droit primaire de la première zone extrémale du premier élément filiforme est solidarisé au segment droit primaire de la première zone extrémale du deuxième élément filiforme pour former la première extrémité distale de la portion absorbante, ces segments droits primaires formant en fait un seul et unique segment droit auquel est solidarisé le premier point d'ancrage.

De même, le segment droit secondaire de la deuxième zone extrémale du premier élément filiforme est solidarisé au segment droit secondaire de la deuxième zone extrémale du deuxième élément filiforme pour former la deuxième extrémité distale de la portion absorbante, ces segments droits secondaires formant en fait un seul et unique segment droit auquel est solidarisé le deuxième point d'ancrage.

En outre, chaque élément filiforme peut avoir des segments droits intermédiaires identiques d'une première longueur entre ses segments droits primaire et secondaire, les segments droits primaire et secondaire étant identiques et ayant une deuxième longueur, la deuxième longueur est supérieure à la première longueur.

On comprend que chaque élément filiforme comporte une pluralité de segments droits, le segment droit de la première zone extrémale d'un élément filiforme étant appelé segment droit primaire, le segment droit de la deuxième zone extrémale d'un élément filiforme étant appelé segment droit secondaire, et les segments droits se trouvant entre le segment droit de la première zone extrémale et le segment droit de la deuxième zone extrémale étant appelée segment droit intermédiaire dans un souci de clarté.

Par suite, la première longueur des segments droits se trouvant entre le segment droit de la première zone extrémale et le segment droit de la deuxième zone extrémale est inférieure à la deuxième longueur des segments droits des première et deuxième zones extrémales.

Ainsi, chaque segment en arc de cercle du deuxième élément filiforme est séparé de chaque segment en arc de cercle du premier élément filiforme de manière à ne pas les toucher pour favoriser la capacité d'allongement en traction de l'élément absorbant.

De plus, les premier et deuxième éléments filiformes étant identiques et disposés en vis-à-vis, chaque segment droit du deuxième élément filiforme se trouve dans le prolongement d'un segment droit du premier élément filiforme.

De même, chaque segment en arc de cercle du deuxième élément filiforme est séparé de chaque segment en arc de cercle du premier élément filiforme de manière à ne pas les toucher.

Enfin, il est avantageux d'avoir un élément absorbant monobloc, le ou les éléments filiformes de l'élément absorbant ainsi que les premier et deuxième points d'ancrage étant obtenus par l'usinage d'un même bloc de matière.

De plus, la partie absorbante étant idéalement contenu dans un plan de manière à travailler dans une direction privilégiée pour maximiser son efficacité, ledit bloc de matière se présente sous la forme d'une plaque plane.

Par conséquent, l'élément absorbant, et donc sa portion absorbante ainsi que chacun des ses éléments filiformes, fabriqués à partir de ladite plaque plane seront contenus dans un même plan.

Le coût de fabrication de l'élément absorbant est ainsi relativement faible alors que les performances de cet élément absorbant sont optimisées.

Par ailleurs, le siège faisant l'objet de l'invention peut comporter une ou plusieurs des caractéristiques additionnelles suivantes.

Ainsi, les premier et deuxième montants de soutien verticaux sont éventuellement symétriques l'un par rapport à l'autre et/ou identiques. De même, les premier et deuxième pieds sont optionnellement symétriques l'un par rapport à l'autre et/ou identiques.

Par ailleurs, le siège comportant un moyen de soutien solidarisé aux premier et deuxième montants de soutien verticaux, un premier point d'ancrage dudit au moins un élément absorbant est fixé au moyen de soutien alors qu'un deuxième point d'ancrage de cet élément absorbant est fixé au moyen de commande solidaire du dossier du baquet.

Lorsque le baquet descend verticalement par rapport aux montants verticaux, éventuellement contenu chacun dans un plan vertical parallèle aux pieds, le deuxième point d'ancrage de chaque élément absorbant se déplace avec le baquet via le moyen de commande. A contrario, le premier point d'ancrage de chaque élément absorbant reste fixe. La traction exercée sur chaque élément absorbé leur permet de dissiper l'énergie provenant de l'énergie cinétique du siège.

Selon un premier mode de réalisation, ledit au moins élément absorbant du moyen d'absorption est contenu dans un premier plan perpendiculaire aux montants de soutien verticaux et sensiblement parallèle au dossier du baquet.

Avantageusement, le moyen de soutien est alors muni d'une plaque reposant sur une première et une deuxième extrémités supérieures respectivement des premier et deuxième montants de soutien verticaux.

Le premier point d'ancrage des éléments absorbants est alors fixé à la plaque du moyen de soutien via un moyen usuel.

De plus, le moyen de guidage comporte une première et une deuxième fentes ménagées respectivement dans les premier et deuxième montants de soutien verticaux, une première et une deuxième extrémités libres d'une barre de commande du moyen de commande traversant les première et deuxième fentes, la barre de commande du moyen de commande étant solidaire du deuxième point d'ancrage et d'au moins un moyen de fixation dudit dossier tel qu'un bossage réalisé sur ce dossier.

La descente du siège, et de sa barre de commande est alors bien guidée par les fentes du moyen de guidage, selon la direction des montants de soutien verticaux.

Selon un deuxième et un troisième modes de réalisation, ledit au moins un élément absorbant est contenu dans un deuxième plan parallèle aux montants de soutien verticaux et sensiblement perpendiculaire au dossier du baquet.

Le moyen de soutien est avantageusement muni d'une barre de soutien reliant les premier et deuxième montants de soutien verticaux en étant solidarisée uniquement à ces premier et deuxième montants de soutien verticaux, et donc pas au baquet du siège, la barre de soutien traversant le premier point d'ancrage dudit au moins un élément absorbant.

Selon le deuxième mode de réalisation, le moyen d'absorption comportant au moins un élément absorbant par montant de soutien vertical, au moins un élément absorbant est fixé par son premier point d'ancrage à chaque montant de soutien vertical par le moyen de soutien. Il est possible de prévoir une unique barre de soutien ou deux barres de soutien qui soutiennent chacune le ou les éléments absorbants d'un montant de soutien vertical.

En référence à une première configuration de ce deuxième mode de réalisation, le moyen de commande comporte une unique barre de commande qui traverse les première et deuxième fentes et le deuxième point d'ancrage du ou des éléments absorbants associés.

De plus, la barre de commande est solidaire du dossier du baquet en étant fixé à au moins un moyen de fixation dudit dossier, la barre de commande traversant un bossage réalisé sur ce dossier par exemple.

Selon une deuxième configuration, le moyen de guidage comportant une première et une deuxième fentes ménagées respectivement dans les premier et deuxième montants de soutien verticaux, un premier et un deuxième boulons de commande du moyen de commande traversent respectivement les première et deuxième fentes et le deuxième point d'ancrage du ou des éléments absorbants associés.

Afin que le moyen de commande soit solidaire du dossier du baquet, les premier et deuxième boulons de commande du moyen de commande traversent de plus des moyens de fixations du dossier, des bossages par exemple.

Selon le troisième mode de réalisation, le moyen de guidage comporte une première et une deuxième fentes ménagées respectivement dans les premier et deuxième montants de soutien verticaux, une première et une deuxième extrémités libres d'une barre de commande du moyen de commande traversant les première et deuxième fentes, la barre de commande étant solidaire du deuxième point d'ancrage et d'au moins un moyen de fixation du dossier.

Par ailleurs, le siège est éventuellement muni d'un moyen de maintien optionnel du baquet pour optimiser sa stabilité en évitant une rotation du baquet autour du moyen de commande.

Par exemple, le moyen de maintien comporte au moins une bielle articulée d'une part sur le baquet et d'autre part sur une manivelle liée mécaniquement à au moins un pied.

Selon une première variante du moyen de maintien, le moyen de maintien comprend une bielle articulée d'une part sur la face inférieure de l'assise du baquet opposée à la face supérieure de l'assisse sur laquelle s'assoit un individu, et, d'autre part, sur une manivelle fixée à au moins l'un des deux pieds.

Selon une deuxième variante du moyen de maintien, le moyen de maintien est pourvu d'une première et d'une deuxième bielles articulées sur la face inférieure de l'assise, la première bielle étant de plus articulée sur une première manivelle fixée au premier pied alors que la deuxième bielle est articulée sur une deuxième manivelle fixée au deuxième pied.

Selon une troisième variante du moyen de maintien, les première et deuxième bielles sont fixées sur une unique manivelle solidarisée à au moins un pied.

Par ailleurs, selon une première variante du piètement, les premier et deuxième montants de soutien verticaux prolongent respectivement les premier et deuxième pieds pour former un première et une deuxième armatures verticales.

Selon une deuxième variante du piètement, le siège comporte une structure portante en forme de Y inversé munie d'une première et d'une deuxième branches inférieures et d'une unique branche supérieure, les premier et deuxième pieds étant respectivement solidarisés aux première et deuxième branches inférieures alors que les premier et deuxième montants de soutien verticaux sont solidarisés à ladite branche supérieure.

L'invention et ses avantages apparaîtront avec plus de détails dans le cadre de la description qui suit avec des exemples de réalisation donnés à titre illustratif en référence aux figures annexées qui représentent :
- la figure 1, une vue de face d'un élément absorbant selon l'invention,
- la figure 2, une vue schématique d'un siège selon un premier mode de réalisation,
- la figure 3, une vue isométrique schématique et épurée d'un siège selon un deuxième mode de réalisation,
- les figures 4 et 5, des vues isométrique et de côté d'un siège selon un troisième mode de réalisation,
- la figure 6, une vue schématique d'une première variante d'un moyen de maintien,
- la figure 7, une vue schématique d'une deuxième variante d'un moyen de maintien, et
- la figure 8, une vue schématique d'une troisième variante d'un moyen de maintien.

Les éléments présents dans plusieurs figures distinctes sont affectés d'une seule et même référence.

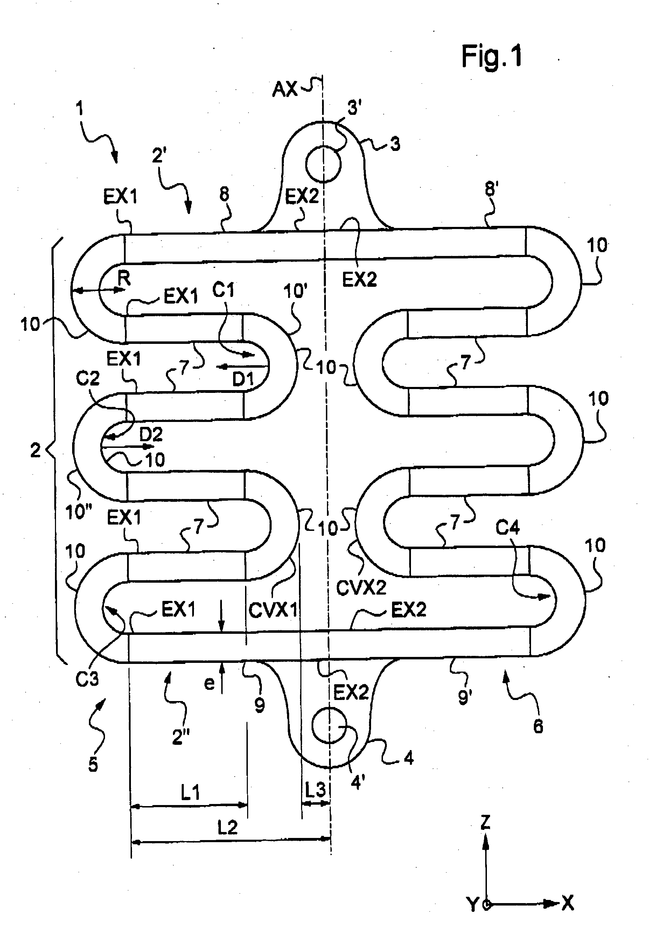

On note que trois directions X, Y et Z orthogonales les unes par rapport aux autres sont représentées sur les figures 1 à 5.

La direction X est dite longitudinale. Une autre direction Y est dite transversale.

Enfin, une troisième direction Z est dite d'élévation et correspond aux dimensions en hauteur des structures décrites.

La figure 1 présente une coupe d'un élément absorbant 1 plan selon l'invention.

Cet élément absorbant comporte successivement un premier point d'ancrage 3, une portion absorbante 2 puis un deuxième point d'ancrage 4. En effet, on constate que la première extrémité distale 2' de la portion absorbante 2 est solidarisée au premier point d'ancrage 3, alors que la deuxième extrémité distale 2" de cette portion absorbante 2 est solidarisée au deuxième point d'ancrage 4.

On note que les premier et deuxième points d'ancrage 3, 4, munis respectivement d'un premier et d'un deuxième orifices 3', 4' de fixation, ainsi que la portion absorbante peuvent constituer une seule et même pièce en provenant de l'usinage d'un unique bloc de matière, la découpe d'une plaque métallique par exemple.

En tirant sur le deuxième point d'ancrage 4, et en maintenant fixement le premier point d'ancrage 3, on exerce une traction sur la portion absorbante. Cette traction peut être initiée par la descente d'un baquet d'hélicoptère lors d'un atterrissage à grande vitesse de cet hélicoptère.

La portion absorbante 2 se déforme alors plastiquement de manière à absorber l'énergie cinétique du baquet pour ralentir et amoindrir la descente de ce baquet.

En premier lieu, la portion absorbante comporte un premier élément filiforme 5 d'épaisseur constante e muni de six segments droits 7, 8, 9 parallèles entre eux, dirigés selon la direction longitudinale X sur la figure 1, et de cinq segments en arc de cercle 10.

On comprend que les nombres de segments droits et en arc de cercle évoqués ci-dessus sont purement indicatifs et donc pas limitatifs. Au minimum, le premier élément filiforme comprend deux segments droits reliés par un segment en arc de cercle.

Le premier élément filiforme comporte donc une succession de segments droits et de segments en arc de cercle, un segment droit 7, 8, 9 succédant et/ou précédant un segment en arc de cercle 10, et un segment en arc de cercle 10 succédant et/ou précédant un segment droit 7, 8, 9.

Plus précisément la première extrémité distale 2' de l'élément absorbant 1, et de fait la première zone extrémale du premier élément filiforme 5, est pourvue d'un segment droit primaire 8.

De même, la deuxième extrémité distale 2" de l'élément absorbant 1, et de fait la deuxième zone extrémale du premier élément filiforme 5, est pourvue d'un segment droit secondaire 9.

Les segments droit primaire 8 et secondaire 9 sont identiques et s'étendent selon une deuxième longueur L2.

Entre ces première et deuxième zones extrémales 2', 2", les segments droits sont des segments droits intermédiaires 7 s'étendant selon une première longueur L1 inférieure à la deuxième longueur L2.

Enfin, les segments droits sont disposés les uns au dessus des autres.

Par ailleurs, les segments en arc de cercle 10 sont tous identiques et présentent un rayon R supérieur à deux millimètres.

On note que la différence entre la deuxième longueur L2 et la première longueur L1 est supérieure à ce rayon R ce qui implique que les extrémités internes EX2 des segments droits primaire 8 et secondaire 9 forment des saillies du premier élément filiforme 5.

De plus, les première et deuxième concavités C1, C2 de deux segments en arc de cercle 10', 10" se succédant, et donc notamment liées à un même segment droit intermédiaire, sont dirigées selon des première et deuxième directions D1, D2 parallèles et opposées, ces première et deuxième directions D1, D2 n'étant de fait pas confondues.

Le premier élément filiforme 5 a alors une forme de serpentin.

En second lieu, la portion absorbante 2 possède un deuxième élément filiforme 6.

En référence à la figure 1, le deuxième élément filiforme 6 est identique au premier élément filiforme 5.

En outre, le deuxième élément filiforme 6 est symétriquement solidarisé au premier élément filiforme 5 par rapport à l'axe de symétrie AX de l'élément absorbant. Les premier et deuxième éléments filiformes 5, 6 sont alors en vis-à-vis l'un de l'autre.

Plus précisément, les premier et deuxième éléments filiformes sont solidaires l'un de l'autre uniquement via leur première et deuxième zones extrémales 2', 2". Ainsi, le segment droit primaire 8 du premier élément filiforme 5 est solidaire du segment droit primaire 8' du deuxième élément filiforme 6, le segment droit secondaire 9 du premier élément filiforme 5 étant solidaire du segment droit secondaire 9' du deuxième élément filiforme 6.

En raison de la symétrie des premier et deuxième éléments filiformes 5, 6, chaque segment droit du deuxième élément filiforme 6 est aligné avec un segment droit du premier élément filiforme 5, sans néanmoins le toucher.

De même, chaque segment en arc de cercle du deuxième élément filiforme 6 se trouve dans l'alignement d'un segment en arc de cercle du premier élément filiforme 5, sans néanmoins le toucher.

Ainsi, chaque segment en arc de cercle externe du premier élément filiforme 5, se trouvant à une deuxième longueur L2 de l'axe de symétrie AX, ont leur concavité en regard de la concavité d'un segment en arc de cercle externe du deuxième élément filiforme 6, se trouvant à une deuxième longueur L2 de l'axe de symétrie AX. A titre d'exemple, les concavités C3, C4 sont donc en regard l'une de l'autre.

De plus, deux segments en arc de cercle externe alignés des premier et deuxième éléments filiformes 5, 6 sont séparés par une distance correspondant à deux fois la deuxième longueur L2, à savoir la somme des deuxièmes longueurs L2 des segments droits primaire 8, 8' ou secondaire 9 , 9'.

A contrario, chaque segment en arc de cercle interne du premier élément filiforme 5, se trouvant à une troisième longueur L3 de l'axe de symétrie AX égale à la deuxième longueur L2 moins le rayon R et la première longueur L1, ont leur convexité en regard de la convexité d'un segment en arc de cercle externe du deuxième élément filiforme 6, se trouvant à une troisième longueur L3 de l'axe de symétrie AX égale à la deuxième distance moins le rayon R et la première longueur L1. A titre d'exemple, les convexités CVX1, CVX2 sont donc en regard l'une de l'autre.

De plus, deux segments en arc de cercle, internes et alignés, des premier et deuxième éléments filiformes 5, 6 sont séparées par une distance correspondant à deux fois la troisième longueur L3.

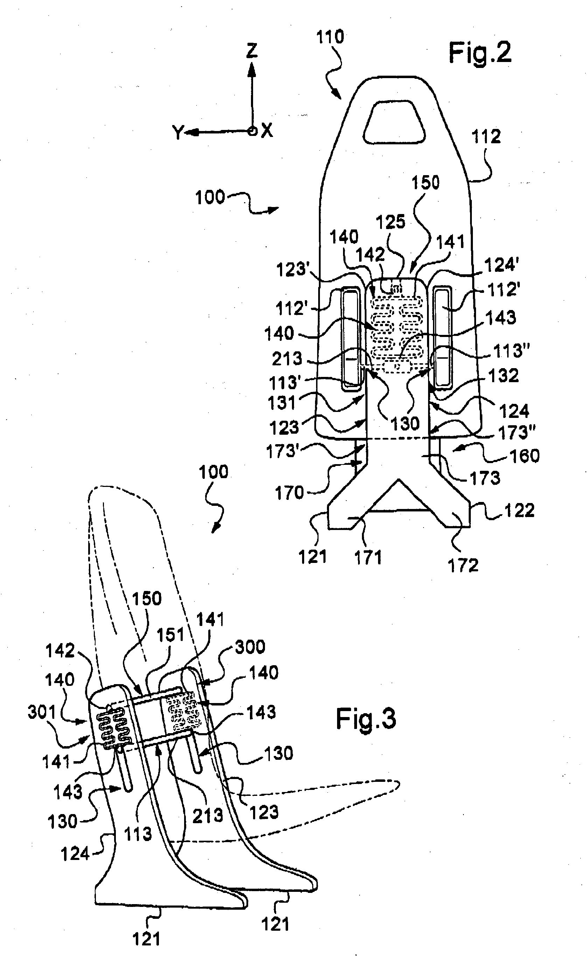

Les figures 2 à 5 présentent des vues de sièges anti-écrasement selon un premier, un deuxième et un troisième modes de réalisation.

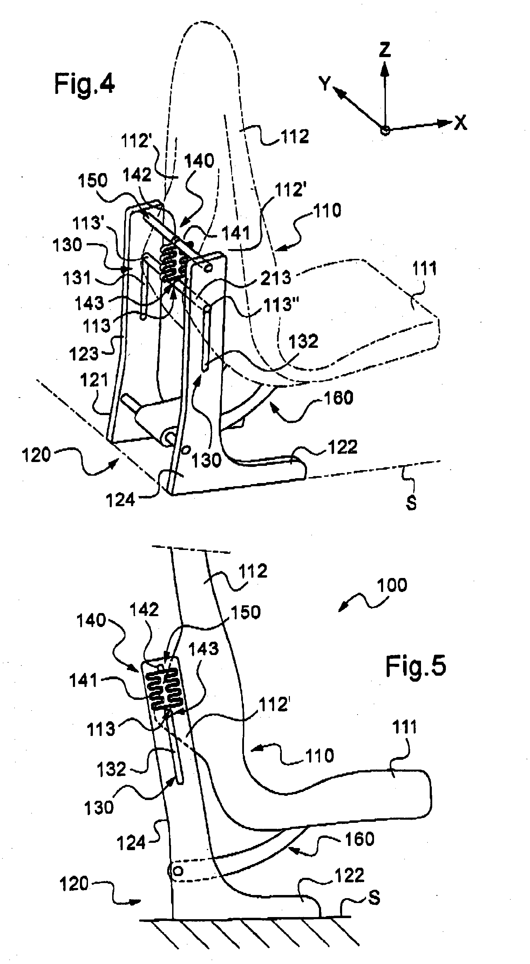

Quel que soit le mode de réalisation, en référence aux figures 4 et 5 par exemple, un siège 100 anti-écrasement comprend un baquet 110 muni d'une assise 111 et d'un dossier 112 sur lequel un individu peut s'asseoir.

De plus, le siège 100 comporte un piètement 120 pour lier le baquet 110 au plancher S d'un véhicule, un hélicoptère par exemple.

Ce piètement 120 est pourvu d'une part d'un premier et d'un deuxième pieds 121, 122 symétriques et/ou identiques, solidarisés chacun au plancher S et, d'autre part, d'un premier et d'une deuxième montants de soutien verticaux 123, 124 identiques, destinés notamment à soutenir le dossier 112 du baquet 110.

En terme d'orientation, le dossier 112 du baquet 110 ainsi que les premier et deuxième montants de soutien verticaux 123, 124 sont dirigés sont l'axe en élévation Z alors que les premier et deuxième pieds 121, 122 et l'assise 111 du baquet 110 sont dirigées selon l'axe longitudinal X.

Par ailleurs, on constate que les premier et deuxième montants de soutien verticaux 123, 124 sont respectivement contenus dans un premier et deuxième plans parallèles aux premier et deuxième pieds.

En outre, les sièges 100 représentés sur les figures comportent un moyen de guidage 130 et un moyen d'absorption 140 d'énergie qui coopèrent chacun avec un moyen de commande 113 solidarisé au dossier 112 du baquet 110 par des moyens de fixation, des ailes fixées au dos du dossier par exemple. De plus, ces sièges sont pourvus d'un moyen de maintien 160 optionnel qui coopère avec le baquet 110 et le piètement 120.

Par conséquent, lorsque le véhicule équipé du siège 100 atterrit brutalement, lors d'un crash par exemple, le baquet continue sa descente en raison de son inertie.

Le moyen de guidage guide alors le déplacement du baquet 110, le moyen d'absorption absorbant une partie de l'énergie cinétique du siège pour ralentir et stopper la descente du baquet afin de garantir l'intégrité physique de l'individu assit sur le siège.

Le moyen de guidage est dans ce contexte pourvu d'une première et d'une deuxième fentes 131, 132 ménagées respectivement dans les premier et deuxième montants de soutien verticaux 123, 124.

En ce qui le concerne, le moyen d'absorption comprend au moins un élément absorbant 141 à déformation plastique lors d'une traction pure, par exemple tel qu'un élément absorbant 1 décrit par la figure 1.

Le ou les éléments absorbants sont alors fixés par leur premier point d'ancrage 142, au moyen de soutien 150, et par leur deuxième point d'ancrage 143 au moyen de commande 113.

En référence à la figure 2, selon le premier mode de réalisation, le moyen d'absorption 140, et donc l'ensemble de ces éléments absorbants 141 est agencé dans un premier plan (Y,Z) perpendiculaire aux premier et deuxième montants de soutien verticaux 123, 124 et parallèle au dossier 112 du baquet 110.

Il est à noter que le moyen d'absorption 140 peut comporter une pluralité d'éléments absorbants 141 agencés en parallèle, à savoir les uns derrière les autres.

Le moyen de soutien 150 est, selon ce premier mode de réalisation, composé d'une plaque 125 solidarisée à une première et une deuxième extrémités supérieures 123', 124' respectivement des premier et deuxième montants de soutien verticaux 123, 124.

Le premier point d'ancrage 142 de l'élément absorbant 141 est alors fixé à la plaque 125 du moyen de soutien 150 via un pion qui traverse le premier point d'ancrage et un moyen de fixation de la plaque 125.

Par ailleurs, le moyen de commande 113 est pourvu d'une barre de commande 213 dont les première et deuxième extrémités libres 113', 113" traversent les première et deuxième fentes 131, 132 du moyen de guidage 130 et peuvent donc coulisser dans ces fentes. Les première et deuxième fentes 131, 132 guident donc le déplacement de la barre de commande 213 solidaire du baquet 110 et par conséquent le déplacement de ce baquet 110.

En effet, ces première et deuxième extrémités libres 113', 113" sont solidarisées à des ailes 112' de fixation du dossier 112.

Par suite, lorsque le baquet descend, il entraine avec lui la barre de commande 213. Au contraire, la plaque de soutien 125 reste dans sa position du fait de son attachement aux premier et deuxième montants de soutien verticaux 123, 124.

En conséquence, la barre de commande 213 exerce une traction pure sur les éléments absorbants 141 du moyen d'absorption d'énergie, le moyen d'absorption absorbant ainsi l'énergie provenant de l'énergie cinétique du baquet 110.

Selon le deuxième mode de réalisation schématisé sur la figure 3, et le troisième mode de réalisation schématisé sur les figures 4 et 5, le moyen d'absorption 140, et donc l'ensemble de ces éléments absorbants 141 est agencé dans un premier plan (X,Z) parallèle aux premier et deuxième montants de soutien verticaux 123, 124 et perpendiculaire au dossier 112 du baquet 110.

En effet, conformément au deuxième mode de réalisation, le moyen d'absorption est composé d'un premier et d'un deuxième groupes 300, 301 d'éléments absorbants respectivement agencés contre les premier et deuxième montants de soutien verticaux 123, 124.

Ainsi, le premier groupe 300 est fixé au premier montant de soutien vertical 123 par le premier point d'ancrage 142 de son ou ses éléments absorbants 141 via le moyen de soutien, le deuxième groupe 301 étant fixé au deuxième montant de soutien vertical 124 par le premier point d'ancrage 142 de son ou ses éléments absorbants 141 via le moyen de soutien.

Selon la première option représentée sur la figure 3, le moyen de soutien comporte une barre de soutien 151 qui traverse les premier et deuxième montants de soutien verticaux 123, 124 puis les premier et deuxième points d'ancrage des éléments absorbants des premier et deuxième groupes 300, 301.

Selon une deuxième option non représentée, le moyen de soutien comporte une première et une deuxième barres de soutien 151 qui traversent respectivement les premier et deuxième montants de soutien verticaux 123, 124 puis les premier et deuxième points d'ancrage des éléments absorbants des premier et deuxième groupes 300, 301

De même, en référence à une première configuration de ce deuxième mode de réalisation, le moyen de commande comporte une unique barre de commande 213 qui traverse les première et deuxième fentes 131, 132 et le deuxième point d'ancrage 143 du ou des éléments absorbants associés.

Selon une deuxième configuration non représentée, le moyen de guidage comportant une première et une deuxième fentes ménagées respectivement dans les premier et deuxième montants de soutien verticaux, un premier et un deuxième boulons de commande du moyen de commande 113 traversent respectivement les première et deuxième fentes et le deuxième point d'ancrage 143 du ou des éléments absorbants associés. De plus, ces premier et deuxième boulons de commande du moyen de commande 113 traversent des moyens de fixations du dossier du baquet, des ailes de ce dossier par exemple

Les figures 4 et 5 présentent un troisième mode de réalisation.

Le moyen de guidage comporte une première et une deuxième fentes 131, 132 ménagées respectivement dans les premier et deuxième montants de soutien verticaux 123, 124, une première et une deuxième extrémités libres 113', 113" d'une barre de commande 213 du moyen de commande 113 traversant les première et deuxième fentes 131, 132, la barre de commande 213 étant solidaire du deuxième point d'ancrage 143 et d'au moins un moyen de fixation du dossier, des ailes 112' du dossier par exemple.

La première extrémité libre 113' de la barre de commande 213 traverse la première fente 131 et peut donc coulisser dans cette première fente 131. De même, la deuxième extrémité libre 113" de la barre de commande 213 traverse la deuxième fente 132 et peut coulisser dans cette deuxième fente 132.

Les première et deuxième fentes 131, 132 guident donc le déplacement de la barre de commande 213 du baquet 110 et par conséquent le déplacement de ce baquet 110.

De plus, le siège 100 possède une barre de soutien 150, indépendante du baquet 110, solidarisée aux premier et deuxième montants de soutien verticaux 123, 124.

L'élément absorbant 141 comportant un premier et un deuxième points d'ancrage 142, 143, la barre de soutien 150 traverse un premier orifice du premier point d'ancrage 142 alors que la barre de commande traverse un deuxième orifice du deuxième point d'ancrage.

Par ailleurs, selon une première variante du piètement présentée sur les figures 3 à 5, les premier et deuxième montants de soutien verticaux 123, 124 prolongent respectivement les premier et deuxième pieds 121, 122.

Ainsi, le premier pied 121 et le premier montant de soutien vertical 123 forment une unique et même pièce, à savoir une première armature verticale. De même, le deuxième pied 122 et le deuxième montant de soutien vertical 124 forment une unique et même pièce, à savoir une deuxième armature verticale. Les premier et deuxième moyens de soutien verticaux 123, 124 peuvent de plus être disposés symétriquement par rapport à un plan de symétrie en élévation du baquet, et/ou être identiques.

Selon une deuxième variante du piètement représentée sur la figure 2, le siège comporte un structure portante 170, en forme de Y inversé, munie d'une première et d'une deuxième branches inférieures 171, 172 et d'une branche supérieure 173.

Les première et deuxième branches inférieures 171, 172 sont fixées aux premier et deuxième pieds 121, 122, les premier et deuxième montants de soutien verticaux 123, 124 étant fixés sur les arêtes latérales 173', 173" de la branche supérieure 173 en vis-à-vis des premier et deuxième pieds 121, 122.

Par ailleurs, quel que soit le mode de réalisation, le siège 100 peut comporter un moyen de maintien 160 muni d'au moins une bielle 161 et d'au moins une manivelle 162.

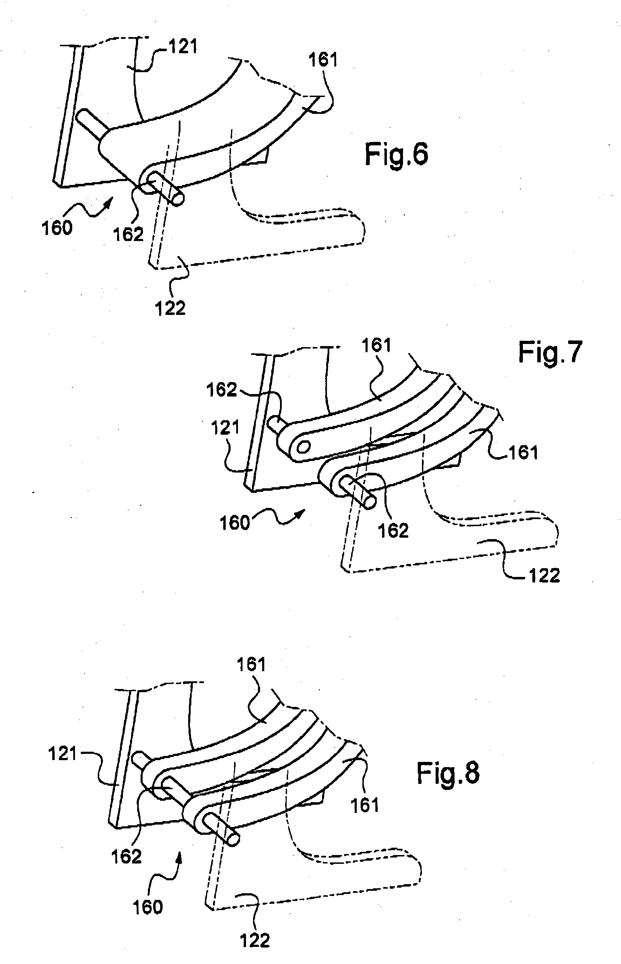

Selon la première variante du moyen de maintien représentée sur la figure 6, ce moyen de maintien 160 est pourvu d'une bielle 161 articulée d'une part à l'assise du baquet du siège et, d'autre part, à une manivelle 162.

De plus, la manivelle 162 est articulée aux premier et deuxième pieds 121, 122 de façon à pouvoir réaliser un mouvement rotatif.

Selon la deuxième variante du moyen de maintien représentée sur la figure 7, ce moyen de maintien 160 est pourvu de deux bielles 161 articulées d'une part à l'assise du baquet du siège et, d'autre part, chacune à une manivelle 162.

De plus, chaque manivelle 162 est articulée à un pied de façon à pouvoir réaliser un mouvement rotatif, la première manivelle étant articulée au premier pied 121 alors que la deuxième manivelle est articulée au deuxième pied 122.

Enfin, selon la troisième variante du moyen de maintien représentée sur la figure 8, ce moyen de maintien 160 est pourvu de deux bielles 161 articulées d'une part à l'assise du baquet du siège et, d'autre part, à une unique manivelle 162.

De plus, la manivelle 162 est articulée aux premier et deuxième pieds 121, 122 de façon à pouvoir réaliser un mouvement rotatif.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, le moyen de maintien décrit sur les figures est muni d'au moins une bielle 161 articulée d'une part sur le baquet et, d'autre part, sur une manivelle 162 liée mécaniquement à au moins un pied.

Toutefois, il est concevable d'utiliser d'autres types de moyens de maintien.

Le moyen de maintien peut ainsi comporter une première et une deuxième glissières, telles que des fentes, ménagées dans les premier et deuxième montants de soutien verticaux à proximité des pieds. Ces première et deuxième glissières coopèrent alors avec une tige solidarisée au baquet, la tige empêchant le baquet d'effectuer un mouvement rotatif autour du moyen de commande.

A titre de variante, il est aussi possible de prévoir un moyen de commande de forme allongée, dans la direction du moyen de guidage dans la direction des première et deuxième fentes du moyen de guidage.

## Revendications

1. Siège anti-écrasement (100) d'un véhicule comprenant un baquet (110) et un piètement (120) pour lier ledit baquet à un plancher (S) dudit véhicule, ledit baquet (110) étant pourvu d'une assise (111) et d'un dossier (112) pour accueillir un individu, ledit piètement (120) étant muni d'un premier et d'un deuxième pieds (121, 122) aptes à être fixés audit plancher (S) de part et d'autre dudit baquet (110) et liés mécaniquement à un premier et deuxième montants de soutien verticaux (123, 124) dudit dossier, ledit siège comportant un moyen de soutien (150) solidarisé aux premier et deuxième montants de soutien verticaux (123, 124) ainsi qu'un moyen de guidage (130) en translation du baquet et un moyen d'absorption (140) d'énergie distincts, lesdits moyens de guidage (130) et d'absorption (140) coopérant chacun avec un moyen de commande (113) solidaire dudit dossier du baquet du siège, ledit moyen de guidage (130) coopérant avec ledit moyen de commande (113) pour guider en translation le déplacement dudit baquet (110) dans une direction prédéterminée lors d'un crash, ledit moyen d'absorption (140) coopérant avec ledit moyen de commande (110) et ledit moyen de soutien (150) pour absorber l'énergie cinétique du siège (100) afin de contrôler la décélération à laquelle est soumis ledit individu,
**caractérisé en ce que** ledit moyen d'absorption (140) étant muni d'au moins un élément absorbant (1, 141) à déformation plastique lors d'une traction pure, ledit élément absorbant (1) d'énergie étant muni d'une portion absorbante (2), d'un premier point d'ancrage (3) et d'un deuxième point d'ancrage (4), une première et une deuxième extrémités distales (2', 2") de ladite partie absorbante (2) étant respectivement solidarisées aux premier et deuxième points d'ancrage (3, 4), ladite portion absorbante (2) comportant deux éléments filiformes (5, 6) solides d'épaisseur constante se déformant élastiquement lors d'une sollicitation en traction inférieure à un seuil prédéterminé et plastiquement lors d'une sollicitation en traction supérieure audit seuil prédéterminé, chaque élément filiforme (5, 6) étant muni d'une succession de segments droits (7, 8, 8', 9, 9') sensiblement parallèles entre eux et de segments en arc de cercle (10) de manière à avoir au moins deux segments droits successifs reliés par un segment en arc de cercle (10), ledit élément absorbant comportant un premier et un deuxième éléments filiformes (5, 6) en vis-à-vis, chaque élément filiforme ayant un segment droit primaire (8, 8') à sa première zone extrémale (2') ainsi qu'un segment droit secondaire (9, 9') à sa deuxième zone extrémale (2"), les premier et deuxième éléments filiformes (5, 6) sont reliés uniquement via leurs zones extrémales (2', 2"), ledit deuxième élément filiforme (6) étant symétriquement solidarisé au premier élément filiforme (5) par rapport à un axe de symétrie (AX) de l'élément absorbant, ledit segment droit primaire (8) du premier élément filiforme (5) étant solidarisé au segment droit primaire (8') du deuxième élément filiforme (6) pour former la première extrémité distale de la portion absorbante alors que ledit segment droit secondaire (9) du premier élément filiforme (5) est solidarisé au segment droit secondaire (9') du deuxième élément filiforme (6) pour former la deuxième extrémité distale de la portion absorbante.

2. Siège selon la revendication 1,
**caractérisé en ce que** lesdits premier et deuxième montants de soutien verticaux (123, 124) sont symétriques l'un par rapport à l'autre et/ou identiques.

3. Siège selon l'une quelconque des revendications précédentes,
**caractérisé en ce que** lesdits premier et deuxième pieds (121, 122) sont symétriques l'un par rapport à l'autre et/ou identiques.

4. Siège selon l'une quelconque des revendications précédentes,
**caractérisé en ce que** ledit élément filiforme (5, 6) ayant une pluralité de segments en arc de cercle (10) présentant chacun une concavité, un premier segment en arc de cercle (10') étant relié à un deuxième segment en arc de cercle (10") lui succédant par un segment droit (7), la première concavité (C1) dudit premier segment en arc de cercle (10') est dirigée selon une première direction (D1) opposée à une deuxième direction (D2) selon laquelle est dirigée la deuxième concavité (C2) dudit deuxième segment en arc de cercle (10").

5. Siège selon l'une quelconque des revendications précédentes,
**caractérisé en ce que** chaque segment en arc de cercle (10) a une forme en demi-cercle régulier et/ou un rayon (R) supérieur ou égal à deux millimètres.

6. Siège selon l'une quelconque des revendications précédentes,
**caractérisé en ce que,** chaque élément filiforme (5, 6) ayant des segments droits intermédiaires (7) identiques d'une première longueur (L1) entre ses segments droits primaire (8, 8') et secondaire (9, 9'), les segments droits primaires (8, 8') et secondaires (9, '9) étant identiques et ayant une deuxième longueur (L2), ladite deuxième longueur (L2) est supérieure à ladite première longueur (L1).

7. Siège selon l'une quelconque des revendications précédentes,
**caractérisé en ce que** chaque segment droit du deuxième élément filiforme (6) se trouve dans le prolongement d'un segment droit du premier élément filiforme (5), chaque segment en arc de cercle (10) du deuxième élément filiforme (6) étant séparé de chaque segment en arc de cercle (10) du premier élément filiforme(5).

8. Siège selon l'une quelconque des revendications précédentes,
**caractérisé en ce que** chaque montant de soutien vertical (123, 124) est contenu dans un plan vertical (P1, P2) parallèle auxdits pieds.

9. Siège selon l'une quelconque des revendications précédentes,
**caractérisé en ce que,** ledit siège (100) comportant un moyen de soutien (150) solidarisé aux premier et deuxième montants de soutien verticaux (123, 124), un premier point d'ancrage (142) dudit au moins un élément absorbant (141) est fixé audit moyen de soutien (150) alors qu'un deuxième point d'ancrage (143) dudit au moins un élément absorbant (141) est fixé audit moyen de commande (113).

10. Siège selon la revendication 9,
**caractérisé en ce que** ledit au moins un élément absorbant (141) est contenu dans un premier plan (Y, Z) perpendiculaire aux montants de soutien verticaux (123, 124) et sensiblement parallèle au dossier (112) du baquet (110).

11. Siège selon la revendication 10,
**caractérisé en ce que** ledit moyen de soutien (150) est muni d'une plaque (125) reposant sur une première et une deuxième extrémités supérieures (123', 124') respectivement des premier et deuxième montants de soutien verticaux (123, 124).

12. Siège selon la revendication 9,
**caractérisé en ce que** ledit au moins un élément absorbant (141) est contenu dans un deuxième plan (X, Z) parallèle aux montants de soutien verticaux (123, 124) et sensiblement perpendiculaire au dossier (112) du baquet (110).

13. Siège selon la revendication 12,
**caractérisé en ce que** ledit moyen de soutien (150) est muni d'une barre de soutien (151) solidarisée uniquement aux premier et deuxième montants de soutien verticaux (123, 124), ladite barre de soutien (151) traversant ledit premier point d'ancrage (142) dudit au moins un élément absorbant (141).

14. Siège selon la revendication 12,
**caractérisé en ce que,** ledit moyen d'absorption comportant au moins un élément absorbant par montant de soutien vertical, au moins un élément absorbant est fixé par son premier point d'ancrage à chaque montant de soutien vertical par ledit moyen de soutien (150).

15. Siège selon l'une quelconque des revendications 10 à 14,
**caractérisé en ce que** ledit moyen de guidage (130) comporte une première et une deuxième fentes (131, 132) ménagées respectivement dans lesdits premier et deuxième montants de soutien verticaux (123, 124), une première et une deuxième extrémités libres (113', 113") d'une barre de commande (213) dudit moyen de commande (113) traversant lesdites première et deuxième fentes (131, 132) ladite barre de commande (213) étant solidaire dudit deuxième point d'ancrage (143).

16. Siège selon la revendication 14,
**caractérisé en ce que** ledit moyen de guidage (130) comporte une première et une deuxième fentes (131, 132) ménagées respectivement dans lesdits premier et deuxième montants de soutien verticaux (123, 124), un premier et un deuxième boulons de commande dudit moyen de commande (113) traversant lesdites première et deuxième fentes (131, 132) et ledit deuxième point d'ancrage de l'élément absorbant associé.

17. Siège selon l'une quelconque des revendications précédentes,
**caractérisé en ce qu'**il comprend un moyen de maintien (160) dudit baquet (110), ledit moyen de maintien (160) comportant au moins une bielle (161) articulée d'une part sur le baquet et d'autre part sur une manivelle (162) liée mécaniquement à au moins un pied (121, 122).

18. Siège selon l'une quelconque des revendications précédentes,
**caractérisé en ce que** lesdits premier et deuxième montants de soutien verticaux (123, 124) prolongent respectivement lesdits premier et deuxième pieds (121, 122) pour former une première et une deuxième armatures verticales.

19. Siège selon l'une quelconque des revendications précédentes,
**caractérisé en ce qu'**il comporte une structure portante (170) en forme de Y inversé muni d'une première et d'une deuxième branches inférieures (171, 172) et d'une unique branche supérieure (173), lesdits premier et deuxième pieds (121, 122) étant respectivement solidarisés latéralement aux première et deuxième branches inférieures (171, 172) alors que lesdits premier et deuxième montants de soutien verticaux (123, 124) sont solidarisés latéralement à ladite branche supérieure (173).

## Patentansprüche

1. Aufprallsicherer Sitz (100) eines Fahrzeugs mit einer Sitzschale (110) und einem Gestell (120), um die Sitzschale mit einem Boden (S) des Fahrzeugs zu verbinden, wobei die Sitzschale (110) mit einer Sitzfläche (111) und einer Rückenlehne (112) versehen ist, um eine Person aufzunehmen, wobei das Gestell (120) mit einem ersten und einem zweiten Fuß (121, 122) versehen ist, die auf dem Boden (S) zu beiden Seiten der Sitzschale (110) befestigt werden können und mechanisch mit einer ersten und einer zweiten senkrechten Stützsäule (123, 124) der Rückenlehne verbunden sind, wobei der Sitz ein Haltemittel (150) aufweist, das mit der ersten und der zweiten senkrechten Haltesäule (123, 124) sowie mit einem Mittel (130) zur Führung der Sitzschale bei einer Translationsbewegung und einem separaten Energieabsorptionsmittel (140) fest verbunden ist, wobei die Führungs(130)- und Absorptions(140)mittel jeweils mit einem Steuermittel (113) zusammenwirken, welches mit der Rückenlehne der Sitzschale des Sitzes fest verbunden ist, wobei das Führungsmittel (130) mit dem Steuermittel (113) zusammenwirkt, um bei einer Translationsbewegung die Verschiebung der Sitzschale (110) während eines Absturzes in einer vorbestimmten Richtung zu führen, wobei das Absorptionsmittel (140) mit dem Steuermittel (110) und dem Haltemittel (150) zusammenwirkt, um die kinetische Energie des Sitzes (100) zu absorbieren, um die Verzögerung zu steuern, der die Person ausgesetzt ist,
**dadurch gekennzeichnet, dass** das Absorptionsmittel (140) mit einem Absorptionselement (1, 141), welches sich während einer reinen Zugbelastung plastisch verformt, versehen ist, wobei das Energieabsorptionselement (1) mit einem absorbierenden Bereich (2), einem ersten Verankerungspunkt (3) und einem zweiten Verankerungspunkt (4) versehen ist, wobei ein erstes und ein zweites distales Ende (2', 2") des absorbierenden Bereichs (2) jeweils mit dem ersten bzw. zweiten Verankerungspunkt (3, 4) verbunden ist, wobei der absorbierende Bereich (2) zwei feste, drahtförmige Elemente (5, 6) konstanter Dicke aufweist, die sich während einer Zugbeanspruchung unterhalb einer vorbestimmten Schwelle elastisch verformen und während einer Zugbelastung oberhalb der vorbestimmten Schwelle plastisch verformen, wobei jedes drahtförmige Element (5, 6) mit einer Aufeinanderfolge von geraden Segmenten (7, 8, 8', 9, 9'), die im Wesentlichen parallel zueinander verlaufen, und mit kreisbogenförmigen Segmenten (10) derart versehen ist, dass mindestens zwei gerade aufeinanderfolgende Segmente durch ein kreisbogenförmiges Segment (10) verbunden sind, wobei das absorbierende Element ein erstes und ein zweites drahtförmiges Element (5, 6) aufweist, die sich gegenüberliegen, wobei jedes drahtförmige Element ein primäres gerades Segment (8, 8') in seinem ersten Endbereich (2') aufweist sowie ein gerades sekundäres Element (9, 9') in seinem zweiten Endbereich (2"), wobei das erste und das zweite drahtförmige Element (5, 6) nur über ihre Endbereiche (2', 2") miteinander verbunden sind, wobei das zweite drahtförmige Elemente (6) relativ zu einer Symmetrieachse (AX) des absorbierenden Elements symmetrisch mit dem ersten drahtförmigen Element (5) fest verbunden ist, wobei das gerade primäre Segment (8) des ersten drahtförmigen Elements (5) mit dem geraden primären Segment (8') des zweiten drahtförmigen Elements (6) fest verbunden ist, um das erste distale Ende des absorbierenden Bereichs zu bilden, während das gerade sekundäre Segment (9) des ersten drahtförmigen Elements (5) mit dem geraden sekundären Segment (9') des zweiten drahtförmigen Elements (6) fest verbunden ist, um das zweite distale Ende des absorbierenden Bereichs zu bilden.

2. Sitz nach Anspruch 1,
**dadurch gekennzeichnet, dass** die erste und die zweite senkrechte Stützsäule (123, 124) zueinander symmetrisch und/oder identisch sind.

3. Sitz nach einem der vorstehenden Ansprüche,
**dadurch gekennzeichnet, dass** der erste und der zweite Fuß (121, 122) zueinander symmetrisch und/oder identisch sind.

4. Sitz nach einem der vorstehenden Ansprüche,
**dadurch gekennzeichnet, dass** das drahtförmige Element (5, 6) eine Mehrzahl von kreisbogenförmigen Segmenten (10) aufweist, die jeweils eine Konkavität aufweisen, wobei ein erstes kreisbogenförmiges Segment (10') mit einem auf es folgenden zweiten kreisbogenförmigen Segment (10") über ein gerades Segment (7) verbunden ist, wobei die erste Konkavität (C1) des ersten kreisbogenförmigen Segments (10') in einer ersten Richtung (D1) ausgerichtet ist, die entgegengesetzt ist zu einer zweiten Richtung (D2), in der die zweite Konkavität (C2) des zweiten kreisbogenförmigen Segments (10") ausgerichtet ist.

5. Sitz nach einem der vorstehenden Ansprüche,
**dadurch gekennzeichnet, dass** jedes kreisbogenförmige Segment (10) die Form eines gleichförmigen Halbkreises aufweist und/oder einen Radius (R) aufweist, der größer oder gleich 2 mm ist.

6. Sitz nach einem der vorstehenden Ansprüche,
**dadurch gekennzeichnet, dass** jedes drahtförmige Element (5, 6) identische geradlinige Zwischensegmente (7) mit einer ersten Länge (L1) zwischen seinen geradlinigen primären Segmenten (8, 8') und sekundären Segmenten (9, 9') aufweist, wobei die geradlinigen primären Segmente (8, 8') und die geradlinigen sekundären Elemente (9, 9') identisch sind, und eine zweite Länge (L2) aufweisen, die größer ist als die erste Länge (L1).

7. Sitz nach einem der vorstehenden Ansprüche,
**dadurch gekennzeichnet, dass** sich jedes gerade Segment des zweiten drahtförmigen Elements (6) in der Verlängerung eines geraden Segments des ersten drahtförmigen Elements (5) befindet, wobei jedes kreisbogenförmige Segment (10) des zweiten drahtförmigen Elements (6) von jedem kreisbogenförmigen Segment (10) des ersten drahtförmigen Elements (5) getrennt ist.

8. Sitz nach einem der vorstehenden Ansprüche,
**dadurch gekennzeichnet, dass** jede senkrechte Stützsäule (123, 124) in einer senkrechten Ebene (P1, P2) enthalten ist, die parallel zu den Füßen ist.

9. Sitz nach einem der vorstehenden Ansprüche,
**dadurch gekennzeichnet, dass** der Sitz (100) ein Stützmittel (150) aufweist, das an der ersten und der zweiten senkrechten Stützsäule (123, 124) befestigt ist, wobei ein erster Verankerungspunkt (142) des mindestens einen absorbierenden Elements (141) an dem Stützmittel (150) befestigt ist, während ein zweiter Verankerungspunkt (143) des mindestens einen absorbierenden Elements (141) an dem Steuermittel (113) befestigt ist.

10. Sitz nach Anspruch 9,
**dadurch gekennzeichnet, dass** das mindestens eine absorbierende Element (141) in einer ersten Ebene (Y, Z) enthalten ist, die senkrecht zu den senkrechten Stützsäulen (123, 124) und im Wesentlichen parallel zur Rückenlehne (112) der Sitzschale (110) ist.

11. Sitz nach Anspruch 10,
**dadurch gekennzeichnet, dass** das Stützmittel (150) mit einer Platte (125) versehen ist, die auf einem ersten und einem zweiten oberen Ende (123', 124') jeweils der ersten und der zweiten senkrechten Stützsäule (123, 124) ruht.

12. Sitz nach Anspruch 9,
**dadurch gekennzeichnet, dass** das mindestens eine absorbierende Element (141) in einer zweiten Ebene (X, Z) enthalten ist, die parallel zu den senkrechten Stützsäulen (123, 124) und im Wesentlichen senkrecht zur Rückenlehne (112) der Sitzschale (110) verläuft.

13. Sitz nach Anspruch 12,
**dadurch gekennzeichnet, dass** das Stützmittel (150) mit einer Stützstrebe (151) versehen ist, die nur mit den ersten und zweiten senkrechten Stützsäulen (123, 124) fest verbunden ist, wobei die Stützstrebe (151) den ersten Verankerungspunkt (142) des mindestens einen absorbierenden Elements (141) durchquert.

14. Sitz nach Anspruch 12,
**dadurch gekennzeichnet, dass** das Absorptionsmittel mindestens ein absorbierendes Element pro senkrechter Stützsäule aufweist, wobei mindestens ein absorbierendes Element mit seinem ersten Verankerungspunkt an jeder senkrechten Stützsäule über das Stützmittel (150) befestigt ist.

15. Sitz nach einem der Ansprüche 10 bis 14,
**dadurch gekennzeichnet, dass** das Führungsmittel (130) einen ersten und einen zweiten Schlitz (131, 132) aufweist, die jeweils in die erste und zweite senkrechte Stützsäule (123, 124) eingearbeitet sind, wobei ein erstes und ein zweites freies Ende (113', 113") einer Steuerstange (213) des Steuermittels (113) den ersten und den zweiten Schlitz (131, 132) durchquert, wobei die Steuerstange (213) mit dem zweiten Verankerungspunkt (143) fest verbunden ist.

16. Sitz nach Anspruch 14,
**dadurch gekennzeichnet, dass** das Führungsmittel (130) einen ersten und einen zweiten Schlitz (131, 132) aufweist, die jeweils in die erste und die zweite senkrechte Stützsäule (123, 124) eingearbeitet sind, wobei ein erster und ein zweiter Steuerbolzen des Steuermittels (113) den ersten und den zweiten Schlitz (131, 132) und den zweiten Verankerungspunkt des zugehörigen absorbierenden Elements durchquert.

17. Sitz nach einem der vorstehenden Ansprüche,
**dadurch gekennzeichnet, dass** er ein Haltemittel (160) der Sitzschale (110) aufweist, wobei das Haltemittel (116) mindestens eine Schaltstange (161) aufweist, die einerseits an der Sitzschale und andererseits an einer Kurbel (162), die mechanisch mit mindestens einem Fuß (121, 122) verbunden ist, angelenkt ist.

18. Sitz nach einem der vorstehenden Ansprüche,
**dadurch gekennzeichnet, dass** die erste und zweite senkrechte Stützsäule (123, 124) jeweils den ersten und den zweiten Fuß (121, 122) verlängern, um ein erstes und ein zweites vertikales Gestell zu bilden.

19. Sitz nach einem der vorstehenden Ansprüche,
**dadurch gekennzeichnet, dass** er einen Trägeraufbau (150) in Form eines umgekehrten Y aufweist, der mit einem ersten und einem zweiten unteren Arm (171, 172) und einem einzigen oberen Arm (173) versehen ist, wobei der erste und der zweite Fuß (121, 122) jeweils seitlich an dem ersten und dem zweiten unteren Arm (171, 172) befestigt sind, während die erste und die zweite senkrechte Stützsäule (123, 124) seitlich an dem oberen Arm (173) befestigt sind.

## Claims

1. Crashworthy seat (100) for a vehicle comprising a bucket (110) and an underframe (120) for connecting said bucket to a floor (S) of said vehicle, said bucket (110) being provided with a pan (111) and with a back (112) for receiving an individual, said underframe (120) being provided with a first and a second foot (121, 122) suitable for being fastened to said floor (S) on either side of said bucket (110) and mechanically connected to a first and second vertical support upright (123, 124) for supporting said back, said seat comprising a support means (150) secured to the first and second vertical support uprights (123, 124), as well as a guide means (130) for guiding the bucket in translation and an energy absorption means (140) which are distinct, said guide means (130) and absorption means (140) each cooperating with a control means (113) secured to said back of the bucket of the seat, said guide means (130) cooperating with said control means (113) to guide the movement of said bucket (110) in translation in a predetermined direction during a crash, said absorption means (140) cooperating with said control means (110) and said support means (150) to absorb the kinetic energy of the seat (100) in order to control the deceleration to which said individual is subjected,
**characterised in that** said absorption means (140) being provided with at least one absorbing element (1, 141) which deforms plastically in pure traction, said energy absorbing element (1) being provided with an absorbing portion (2), with a first anchor point (3) and with a second anchor point (4), a first and a second distal end (2', 2") of said absorbing portion (2) being secured respectively to the first and second anchor points (3, 4), said absorbing portion (2) comprising two solid filiform elements (5, 6) of constant thickness which deform elastically when stressed in traction below a predetermined threshold and plastically when stressed in traction above said predetermined threshold, each filiform element (5, 6) being provided with a succession of straight segments (7, 8, 8', 9, 9') substantially parallel to one another and of circularly-arcuate segments (10) so as to have at least two successive straight segments connected by a circularly-arcuate segment (10), said absorbing element comprising a first and a second filiform element (5, 6) facing each other, each filiform element having a primary straight segment (8, 8') in its first end zone (2') and a secondary straight segment (9, 9') in its second end zone (2"), the first and second filiform elements (5, 6) are connected solely via their end zones (2', 2"), said second filiform element (6) being symmetrically secured to the first filiform element(5) relative to an axis of symmetry (AX) of the absorbing element, said primary straight segment (8) of the first filiform element (5) being secured to the primary straight segment (8') of the second filiform element (6) to form the first distal end of the absorbing portion, while said secondary straight segment (9) of the first filiform element (5) is secured to the secondary straight segment (9') of the second filiform element (6) to form the second distal end of the absorbing portion.

2. Seat according to Claim 1,
**characterised in that** said first and second vertical support uprights (123, 124) are symmetrical relative to one another and/or identical.

3. Seat according to any one of the preceding claims, **characterised in that** said first and second feet (121, 122) are symmetrical relative to one another and/or identical.

4. Seat according to any one of the preceding claims,
**characterised in that** said filiform element (5, 6) having a plurality of circularly-arcuate segments (10), each having a concavity, a first circularly-arcuate segment (10') being connected to a second circularly-arcuate segment (10") following it by a straight segment (7), the first concavity (C1) of said first circularly-arcuate segment (10') is directed in a first direction (D1) opposite to a second direction (D2) in which the second concavity (C2) of said second circularly-arcuate element (10") is directed.

5. Seat according to any one of the preceding claims,
**characterised in that** each circularly-arcuate segment (10) is in the form of a regular semicircle and/or has a radius (R) greater than or equal to two millimetres.

6. Seat according to any one of the preceding claims,
**characterised in that**, each filiform element (5, 6) having identical intermediate straight segments (7) of a first length (L1) between its primary (8, 8') and secondary (9, 9') straight segments, the primary (8, 8') and secondary (9, 9') straight segments being identical and having a second length (L2), said second length (L2) is greater than said first length (L1).

7. Seat according to any one of the preceding claims,
**characterised in that** each straight segment of the second filiform element (6) is in line with a straight segment of the first filiform element (5), each circularly-arcuate segment (10) of the second filiform element being separated from each circularly-arcuate segment (10) of the first filiform element (5).

8. Seat according to any one of the preceding claims,
**characterised in that** each vertical support upright (123, 124) is contained in a vertical plane (PI, P2) parallel to said feet.

9. Seat according to any one of the preceding claims,
**characterised in that**, said seat (100) comprising a support means (150) secured to the first and second vertical support uprights (123, 124), a first anchor point (142) of said at least one absorbing element (141) is fastened to said support means (150), while a second anchor point (143) of said at least one absorbing element (141) is fastened to said control means (113).

10. Seat according to Claim 9,
**characterised in that** said at least one absorbing element (141) is contained in a first plane (Y, Z) perpendicular to the vertical support uprights (123, 124) and substantially parallel to the back (112) of the bucket (110).

11. Seat according to Claim 10,
**characterised in that** said support means (150) is provided with a plate (125) resting on a first and a second top end (123', 124') of the first and second vertical support uprights (123, 124) respectively.

12. Seat according to Claim 9,
**characterised in that** said at least one absorbing element (141) is contained in a second plane (X, Z) parallel to the vertical support uprights (123, 124) and substantially perpendicular to the back (112) of the bucket (110).

13. Seat according to Claim 12,
**characterised in that** said support means (150) is provided with a support bar (151) secured solely to the first and second vertical support uprights (123, 124), said support bar (151) passing through said first anchor point (142) of said at least one absorbing element (141).

14. Seat according to Claim 12,
**characterised in that**, said absorption means comprising at least one absorbing element per vertical support upright, at least one absorbing element is fastened by its first anchor point to each vertical support upright by said support means (150).

15. Seat according to any one of Claims 10 to 14,
**characterised in that** said guide means (130) comprises a first and a second slot (131, 132) formed respectively in said first and second vertical support uprights (123, 124), a first and a second free end (113', 113") of a control bar (213) of said control means (113) passing through said first and second slots (131, 132), said control bar (213) being secured to said second anchor point (143).

16. Seat according to Claim 14,
**characterised in that** said guide means (130) comprises a first and a second slot (131, 132) formed respectively in said first and second vertical support uprights (123, 124), a first and a second control bolt of said control means (113) passing through said first and second slots (131, 132) and said second anchor point of the associated absorbing element.

17. Seat according to any one of the preceding claims,
**characterised in that** it comprises a holding means (160) for holding said bucket (110), said holding means (160) comprising at least one connecting rod (161) articulated on one side on the bucket and on the other side on a crank (162) mechanically connected to at least one foot (121, 122).

18. Seat according to any one of the preceding claims,
**characterised in that** said first and second vertical support uprights (123, 124) extend said first and second feet (121, 122) respectively, to form a first and a second vertical brace.

19. Seat according to any one of the preceding claims,
**characterised in that** it comprises an inverted Y-shaped carrying structure (170) provided with a first and a second bottom branch (171, 172) and a single top branch (173), said first and second feet (121, 122) being secured laterally to the first and second bottom branches (171, 172) respectively, while said first and second vertical support uprights (123, 124) are secured laterally to said top branch (173).
